# EUROPÄISCHE PATENTSCHRIFT

(11) **EP 3 368 211 B1**
(45) Veröffentlichungstag und Bekanntmachung des Hinweises auf die Patenterteilung: **28.08.2019**
(21) Anmeldenummer: 16787896.6
(22) Anmeldetag: 28.10.2016
(51) Int. Cl.: B01J 20/04, B01J 20/06, B01J 20/20, C02F 1/28, B01J 20/28, C02F 103/00, C02F 101/10, C02F 101/20, C02F 101/32

(54) **ZUSAMMENSETZUNG ZUR IMMOBILISIERUNG VON METALLIONEN**
COMPOSITION FOR IMMOBILISING METAL IONS
COMPOSITION POUR IMMOBILISER DES IONS MÉTALLIQUES

(30) Priorität: 29.10.2015 DE 102015221206
(43) Veröffentlichungstag der Anmeldung: 05.09.2018
(73) Patentinhaber: Fränkische Rohrwerke GEBR. Kirchner GmbH & Co. KG, 97486 Königsberg (DE)
(72) Erfinder: KIRCHNER, Otto, 97486 Königsberg (DE)
(74) Vertreter: Weickmann & Weickmann PartmbB
(86) Internationale Anmeldenummer: PCT/EP2016/076082
(87) Internationale Veröffentlichungsnummer: WO 2017/072302

(56) Entgegenhaltungen:
- EP-A1- 1 878 703
- EP-A2- 1 344 564
- EP-A2- 1 900 692
- EP-A2- 2 428 259

## Beschreibung

Die vorliegende Erfindung betrifft eine Zusammensetzung, insbesondere zur Immobilisierung von Metallionen, umfassend mindestens ein Eisenhydroxid und mindestens ein poröses Trägermaterial, eine Filtereinrichtung bzw. eine Abwasserbehandlungsvorrichtung, umfassend diese Zusammensetzung, sowie deren Verwendung zur Behandlung von Abwasser.

Niederschläge, die insbesondere von Verkehrsflächen abfließen, sind oftmals mit einer Vielzahl an Stoffen (z.B. Schwermetalle, polyzyklische aromatische Kohlenwasserstoffe und Auftausalze) verunreinigt und bedürfen vor Versickerung oder Einleitung in Gewässer einer Behandlung.

In den letzten Jahren wurden zahlreiche dezentrale Behandlungsanlagen als Alternativen zu zentralen Anlagen, wie Regenklärbecken bzw. Retentionsbodenfilter, für Verkehrsflächenabflüsse entwickelt. Üblicherweise werden in den dezentralen Anlagen die von Verkehrsflächenabflüssen stammenden Schadstoffe an geeigneten Filtermedien adsorbiert.

Gängige Abwasserbehandlungsvorrichtungen werden beispielsweise unter der Bezeichnung *"SediSubstrator*®*"* von der Anmelderin angeboten. Derartige Abwasserbehandlungsvorrichtungen sind beispielsweise in DE 10 2010 040 645 oder DE 10 2008 007 227 beschrieben. Während in der ersten Reinigungsstufe der Anlage zunächst sedimentierbare Feststoffe abgetrennt werden, wird das vorgereinigte Abwasser dann in einer zweiten Reinigungsstufe einer Filtereinrichtung zugeführt, in der die im Abwasser verbliebenen Fremdstoffe, zum Beispiel gelöste Metallionen, insbesondere Schwermetallionen, Ölpartikel etc., abgetrennt werden. Das gereinigte Abwasser ist weitgehend frei von umweltschädlichen Substanzen und kann nach der Behandlung ohne Bedenken der Umwelt zugeführt werden.

Die Filtereinrichtungen sind insbesondere dazu ausgelegt, die im Abwasser verbliebenen Metallionen, vor allem Schwermetallionen, zu immobilisieren. Filtereinrichtungen oder Filtermedien werden in einem bestimmten Zyklus (nach dem eine annähernd vollständige Beladung angenommen wird) ausgewechselt und fachmännisch entsorgt. Der Zyklus sollte 3 Jahre nicht unterschreiten, um einen wirtschaftlichen Betrieb der Anlagen gewährleisten zu können. Aus diesem Grund sollte die Ladungskapazität der Filtermedien für Metallionen möglichst hoch sein. Als geeignete Filtermedien werden derzeit Materialien auf Basis von Carbonaten, Kohle, Koks oder Aluminiumoxid eingesetzt.

Aus EP 1 344 564 A2 sind Zusammensetzungen zur Wasserreinigung bekannt, welche neben Eisenoxid und/oder Eisenoxihydroxid als Hauptkomponente auch Zusatzstoffe aufweisen. Als Zusatzstoffe werden u.a. Calciumsulfid, organische Sulfide, Calciumsulfid, Calciumsulfat, aber auch Herdofenkoks genannt.

Es hat sich allerdings gezeigt, dass Abwässer, die Auftausalze (Streusalz) enthalten, wie sie üblicherweise beim Winterdienst zur Vermeidung von Eisbildung eingesetzt werden, eine Remobilisierung (Desorption) der bereits im Filtermedium immobilisierten Fremdstoffe, insbesondere Metallionen, bewirken. Als Auftausalz werden einerseits feste Streusalze, wie beispielsweise Natriumchlorid, eingesetzt. Neuerdings werden auch sogenannte Nasssalze verwendet, bei denen das Streusalz bereits in flüssiger Form oder als wässrige Suspension auf die Straße aufgebracht wird. Solche Nasssalze benetzen besser und können im Vergleich zu *"trockenem"* Streusalz sparsamer aufgebracht werden. Für Nasssalze werden bevorzugt Salze oder Salzmischungen verwendet, die eine länger anhaltende Tauwirkung und eine effektivere Gefrierpunktserniedrigung gewährleisten. Für Nasssalze werden insbesondere Mischungen aus Natriumchlorid und Calciumchlorid bzw. Natriumchlorid und Magnesiumchlorid verwendet. Hilliges et al. (J. Environ. Man., Band 128, 2013, Seiten 306-312) untersuchten die Schadstoffremobilisierung aus Behandlungssystemen für Verkehrsflächenabflüsse durch Streusalzeinwirkung. In der Studie wurde die Remobilisierung von bereits auf Filtermedien (z.B. Braunkohlenkoks oder Steinkohle) immobilisierten Schwermetallen unter Einwirkung von auftausalzhaltigen Abwässern erstmals wissenschaftlich bestätigt.

Aufgabe der vorliegenden Erfindung ist es daher, Filtermedien bereitzustellen, die eine reduzierte Remobilisierung (Desorption) von immobilisierten Schadstoffen unter Einfluss von salzhaltigen Abwässern aufweisen.

Diese Aufgabe wird erfindungsgemäß durch eine Zusammensetzung gemäß Anspruch 1 gelöst. Die Zusammensetzung eignet sich insbesondere zur Immobilisierung von Metallionen und zeigt auch in Gegenwart von Streusalz (insbesondere Natriumchlorid, Magnesiumchlorid, Calciumchlorid und Mischungen davon) eine reduzierte Remobilisierungs- bzw. Desorptionsneigung.

In einer bevorzugten Ausführungsform umfasst die Zusammensetzung ferner (iii) Calciumcarbonat und gegebenenfalls (iv) mindestens ein Manganoxid.

In einer bevorzugten Ausführungsform umfasst die Zusammensetzung (i) mindestens ein Eisenhydroxid, (ii) mindestens ein poröses Trägermaterial, (iii) Calciumcarbonat und (iv) mindestens ein Manganoxid.

Als Komponente (i) wird bevorzugt mindestens ein Eisen(III)-hydroxid (Fe(OH)3) oder Eisen(III)-oxidhydroxid, stärker bevorzugt ausgewählt aus Wiesenerz (Fe₂O₃·3H₂O oder 2FeO(OH)·2H₂O), Limonit (2Fe₂O₃·3H₂O oder 4FeO(OH)·H₂O), Gelbeisenerz (Fe₂O₃·2H₂O oder 2FeO(OH)·H₂O) und Goethit (Fe₂O₃·H₂O oder FeO(OH)), verwendet.

Die Zusammensetzung enthält bevorzugt etwa 30-80 Gew.-%, stärker bevorzugt 40-70 Gew.-%, der Komponente (i), bezogen auf die Gesamtzusammensetzung.

Bevorzugt ist das poröse Trägermaterial ein basisches Material. Ein basisches Trägermaterial im Sinne der vorliegenden Erfindung weist in einer wässrigen Suspension (20 Gew.-%) bei 20 °C einen pH Wert von > 7, bevorzugt > 7,5, stärker bevorzugt > 8 und am stärksten bevorzugt zwischen 8 und 9, auf.

Das poröse Trägermaterial (ii) weist bevorzugt ein Porenvolumen von mindestens 20-80 %, bevorzugt 40-60 %, auf. Die spezifische Oberfläche des porösen Trägermaterials (ii) liegt bevorzugt im Bereich 100-400 m²/g, stärker bevorzugt 250-350 m²/g (gemessen nach BET, DIN ISO 9277:2003-05). Die Komponente (ii) liegt bevorzugt in Form eines Granulats vor. Hierbei ist die mittlere Korngröße bevorzugt etwa 0,5-10 mm, stärker bevorzugt 1,0-6 mm und noch stärker bevorzugt 1,0-4,5 mm. Die Schüttdichte des porösen Trägermaterials (ii) liegt bevorzugt zwischen 300 und 600 kg/m³, stärker bevorzugt zwischen 400 und 500 kg/m³.

In einer bevorzugten Ausführungsform basiert das poröse Trägermaterial (ii) auf Kohle oder Carbonat, z.B. Erdalkalicarbonat (Magnesiumcarbonat, Calciumcarbonat und Mischungen davon, insbesondere Calciumcarbonat), stärker bevorzugt auf Kohle. Erfindungsgemäß ist die Komponente (ii) ein Koksmaterial, das modifiziert ist. Besonders geeignet sind Braunkohlenkoks oder Steinkohlenkoks, stärker bevorzugt Braunkohlenkoks.

Erfindungsgemäß ist der Koks mit Schwefel und/oder Schwefelverbindungen, insbesondere mit mindestens einem Polysulfid, modifiziert sein. In diesem Fall enthält das Koksmaterial bevorzugt 0,3-0,8 Gew.-%, stärker bevorzugt 0,4-0,6 Gew.-%, Schwefel, bezogen auf das Gesamtgewicht des Koksmaterials. Die Modifikation des Koksmaterials mit Schwefel und/oder Schwefelverbindungen kann durch dem Fachmann bekannte Verfahren erfolgen. Bevorzugt werden die Koksmaterialien gemäß dem in DE 10 2006 050 987 beschriebenen Verfahren modifiziert.

In einer besonders bevorzugten Ausführungsform ist das poröse Trägermaterial (ii) ein mit mindestens einem Polysulfid modifizierter Braunkohlenkoks.

Das poröse Trägermaterial (ii) liegt bevorzugt in einem Anteil von etwa 20-50 Gew.-%, bevorzugt 20-30 Gew.-%, bezogen auf die Gesamtzusammensetzung, vor.

In einer bevorzugten Ausführungsform enthält die Zusammensetzung Calciumcarbonat, insbesondere mit einem Anteil von etwa 0-30 Gew.-%, bevorzugt 5-30 Gew.-% und stärker bevorzugt 7-25 Gew.-%, bezogen auf die Gesamtzusammensetzung.

Die erfindungsgemäße Zusammensetzung kann ferner mindestens ein Manganoxid, bevorzugt Mangan(III)-oxid oder Mangan(IV)-oxid, insbesondere MnO₂, enthalten.

Der Anteil der Komponente (iv) an der Gesamtzusammensetzung beträgt bevorzugt etwa 0-10 Gew.-%, stärker bevorzugt 0,05-8 Gew.-%, noch stärker bevorzugt 0,5-5 Gew.-%.

In einer bevorzugten Ausführungsform liegt die Komponente (i) und gegebenenfalls die Komponente (iii) und gegebenenfalls die Komponente (iv) in Form eines Granulats vor. Ein Granulat im Sinne der vorliegenden Erfindung besteht aus vielen kleinen, festen Partikeln, wie Körnern oder Kugeln. Das Granulat hat bevorzugt eine mittlere Korngröße (z.B. d₅₀ gemessen nach DIN 18123) von 0,2-5 mm, stärker bevorzugt 1,0-3,0 mm. Als geeignete Porosität des Granulats haben sich insbesondere Werte von mindestens 50 %, bevorzugt 70-95 %, herausgestellt.

Das die Komponenten (i) und gegebenenfalls (iii) und gegebenenfalls (iv) enthaltende Granulat hat bevorzugt eine spezifische Oberfläche (nach BET) von 100-500 m²/g, stärker bevorzugt 200-350 m²/g. Das Granulat hat ferner bevorzugt eine Schüttdichte von 400-800 kg/m³, stärker bevorzugt 500-700 kg/m³.

### Bevorzugt umfasst die Zusammensetzung

(a) mindestens ein Granulat aus den Komponenten (i) und gegebenenfalls (iii) und gegebenenfalls (iv) und
(b) mindestens ein poröses Trägermaterial (ii).

In einer stärker bevorzugten Ausführungsform umfasst die Zusammensetzung
(A) mindestens ein Granulat aus den Komponenten (i) und gegebenenfalls (iii) und gegebenenfalls (iv) und
(B) mindestens ein poröses Trägermaterial in Form eines Granulats wie oben definiert.

Die Komponenten (a) bzw. (A) zu (b) bzw. (B) liegen bevorzugt in einem Gewichtsverhältnis von 80:20 bis 65:35, stärker bevorzugt 80:20 bis 70:30, noch stärker bevorzugt 78:22 bis 70,4:29,6, vor.

In einer anderen Ausführungsform ist das Volumenverhältnis der Komponenten (a) bzw. (A) zu (b) bzw. (B) im Bereich von 2:1 (d.h. ein Volumenteil (a) bzw. (A) zu einem Volumenteil (b) bzw. (B)) bis 5:1 (d.h. vier Volumenteile (a) bzw. (A) zu einem Volumenteil (b) bzw. (B)), bevorzugt 3:1 bis 4:1.

In einer bevorzugten Ausführungsform umfasst die Zusammensetzung: (i) mindestens ein Eisenhydroxid, (ii) mindestens ein poröses Trägermaterial, insbesondere mit Schwefel und/oder Schwefelverbindungen modifizierten Koks, und (iii) Calciumcarbonat.

In einer weiteren bevorzugten Ausführungsform umfasst die Zusammensetzung: (i) mindestens ein Eisenhydroxid, (ii) mindestens ein poröses Trägermaterial, insbesondere mit Schwefel und/oder Schwefelverbindungen modifizierten Koks, (iii) Calciumcarbonat und (iv) mindestens ein Manganoxid.

In einer weiteren bevorzugten Ausführungsform umfasst die Zusammensetzung: (i) mindestens ein Eisenhydroxid, (ii) mindestens ein poröses Trägermaterial, insbesondere mit Schwefel und/oder Schwefelverbindungen modifizierten Koks, und (iv) mindestens ein Manganoxid.

In einer bevorzugten Ausführungsform liegen die Komponenten (i)-(iv) in der Zusammensetzung als homogene Mischung, als Mischung mit einem Gradienten oder in separaten Schichten vor.

In einer weiteren bevorzugten Ausführungsform liegen das mindestens eine poröse Trägermaterial (b) bzw. (B) und das Granulat (a) bzw. (A) in der Zusammensetzung als homogene Mischung, als Mischung mit einem Gradienten oder in separaten Schichten vor. Bevorzugt ist eine homogene Mischung, die durch Mischen der Komponenten (a) bzw. (A) und (b) bzw. (B) erhalten werden kann. Beim Mischen ist ein Abrieb der Materialien zu vermeiden. Die Komponenten (a) bzw. (A) und (b) bzw. (B) können - z.B. innerhalb eines Behälters - in separaten Schichten vorliegen. Die separaten Schichten können unterschiedliche Dicken aufweisen. Bevorzugt liegen die Schichten (a) bzw. (A) und (b) bzw. (B) alternierend vor. In einer bevorzugten Ausführungsform erfolgt die Schichtung derart, dass das zu reinigende Abwasser in Strömungsrichtung zuerst die Schicht (a) bzw. (A) und anschließend die Schicht (b) bzw. (B) durchströmt.

Ein weiterer Aspekt der vorliegenden Erfindung betrifft eine Filtereinrichtung, insbesondere zur Abwasserbehandlung, umfassend eine erfindungsgemäße Zusammensetzung als Filtermedium. Die Filtereinrichtung umfasst bevorzugt ein Gehäuse mit einer Mehrzahl an Durchbrechungen, gegebenenfalls eine Maschenschicht und gegebenenfalls eine Dränschicht. Das Gehäuse ist dabei vorteilhafter Weise so ausgebildet, dass das Filtermedium vom Gehäuse aufgenommen werden kann.

Das Gehäuse der Filtereinrichtung kann im Wesentlichen zylinderförmig ausgebildet sein. Laut der allgemeinen Definition eines Zylinders, entsteht dieser durch Verschiebung einer in einer Ebene liegenden, in sich geschlossenen Kurve entlang einer Gerade, die nicht in dieser Ebene liegt. Um eine möglichst gleichmäßige Anströmung des zu filternden Abwassers zu ermöglichen, ist es vorteilhaft, wenn das Gehäuse im Wesentlichen in Form eines geraden Kreiszylinders ausgebildet ist. Prinzipiell sind jedoch auch anderen Formen, wie etwa eine Quaderform, denkbar. In einer bevorzugten Ausführungsform wird das Gehäuse der Filtereinrichtung horizontal angeströmt, d.h die Längsachse des Gehäuses liegt senkrecht zu der zu erwartenden Abwasserströmung. In einer anderen Ausführungsform trifft die Strömung senkrecht auf die geschlossene Kurve, d.h. die Strömungsrichtung und die Längsachse des Gehäuses laufen parallel zueinander.

In einer vorteilhaften Weiterbildung der Erfindung wird vorgeschlagen, dass das Gehäuse der Filtereinrichtung eine um eine im Wesentlichen vertikale Achse (Längsachse) umlaufende äußere Umfangswand und eine um eine im Wesentlichen vertikale Achse umlaufende innere Umfangswand umfasst, die zwischen sich einen Aufnahmeraum für das Filtermedium bilden und jeweils von Abwasser durchströmbar ausgebildet sind. Ferner kann das Gehäuse eine obere Begrenzungswand aufweisen, die das Gehäuse nach oben vollständig flüssigkeitsdicht abschließt, während eine ebenfalls abwasserdicht ausgebildete untere Begrenzungswand lediglich den Aufnahmeraum nach unten flüssigkeitsdicht abschließt. Das Filtermedium kann von oben in den Aufnahmeraum der Filtereinrichtung eingeführt werden, wobei die durchströmbar ausgebildete innere und äußere Umfangswand des Filtergehäuses das Filtermedium umgibt. Um dabei zu verhindern, dass ungefiltertes Abwasser in den filtermediumfreien Innenbereich der Filtereinrichtung strömen kann, umfasst diese die obere Begrenzungswand, welche das Gehäuse nach oben vollständig flüssigkeitsdicht abschließt. Somit ist sichergestellt, dass nur von dem Filtermedium gefiltertes Abwasser in den filtermediumfreien Innenbereich der Filtereinrichtung gelangt. Von dort kann das gefilterte Abwasser dann durch eine oder mehrere in der unteren Begrenzungswand vorgesehene Öffnungen abströmen.

Die obere Begrenzungswand kann ferner eine Einhakvorrichtung, wie etwa einen Ring, zum Hochziehen bzw. Herablassen wenigstens eines Abschnitts der Filtereinrichtung umfassen.

In Weiterbildung der Erfindung wird ferner vorgeschlagen, dass die äußere Umfangswand und die innere Umfangswand des Gehäuses jeweils eine Mehrzahl an von dem Abwasser durchströmbaren Durchbrechungen aufweisen, wobei zwischen dem Filtermedium auf der einen Seite und der äußeren Umfangswand oder/und der inneren Umfangswand auf der anderen Seite jeweils eine Dränschicht angeordnet ist, und wobei vorzugsweise zwischen der äußeren Umfangswand bzw. der inneren Umfangswand und der dieser Wand jeweils zugeordneten Dränschicht eine Maschenschicht angeordnet ist, welche eine Maschenweite aufweist, die kleiner als die kleinste Korngröße des verwendeten Filtermediums ist.

Die Maschenschicht, die auch unter der Bezeichnung *"Gazeschicht"* bekannt ist, kann das Filtermedium quasi als *"Packung"* im Inneren des Filtergehäuses sicher umschließen, wobei die Maschenweite der Maschenschicht auf die Korngröße des verwendeten Filtermediums abzustimmen ist. Auf diese Weise ist es möglich, das Filtermedium als Ganzes aus dem Filtergehäuse herauszuholen oder einzubringen. Die Dränschicht kann dabei wie ein Abstandshalter jeweils zwischen der Maschenschicht auf der einen Seite und der äußeren Umfangswand bzw. der inneren Umfangswand des Filtergehäuses auf der anderen Seite angeordnet sein kann. Die Dränschicht dient dazu, das in den Aufnahmeraum für das Filtermedium einströmende Abwasser möglichst gleichmäßig über die gesamte Außenmantelfläche des Filtermediums zu verteilen bzw. das aus dem Aufnahmeraum für das Filtermedium über die gesamte Innenmantelfläche des Filtermediums ausströmende Abwasser zu sammeln und den Durchbrechungen zuzuführen. Somit kann die Leistungsfähigkeit des Filtermediums bestmöglich genutzt werden. Bei der Dränschicht kann es sich beispielsweise um ein dreidimensionales, mattenartiges Kunststofferzeugnis handeln. Die Maschenschicht ist bevorzugt aus natürlichem oder synthetischem Vliesmaterial.

Eine bevorzugte Filtereinrichtung ist in DE 10 2010 040 645 beschrieben.

In der Filtereinrichtung liegt das Filtermedium wie oben beschrieben bevorzugt als homogene Mischung, als Mischung mit einem Gradienten oder in separaten Schichten vor. Bevorzugt ist eine homogene Mischung, die durch Mischen der Komponenten (i)-(iv) oder (a) bzw. (A) und (b) bzw. (B) erhalten werden kann. Sofern die Komponenten in separaten Schichten vorliegen, erfolgt die Schichtung bevorzugt derart, dass das zu reinigende Abwasser in Strömungsrichtung zuerst die Schicht der Komponente (i) und ggf. (iii) und ggf. (iv) oder (a) bzw. (A) und anschließend die Schicht der Komponente (ii) oder (b) bzw. (B) durchströmt.

In einem weiteren Aspekt ist die vorliegende Erfindung auf eine Abwasserbehandlungsvorrichtung gerichtet, umfassend einen Abwasserzulauf, einen Abwasserablauf und eine erfindungsgemäße Zusammensetzung oder Filtereinrichtung. Bevorzugt umfasst die Abwasserbehandlungsvorrichtung einen Abwasserzulauf, einen Abwasserablauf und wenigstens eine strömungstechnisch zwischen dem Abwasserzulauf und dem Abwasserablauf angeordnete Filtereinrichtung wie oben beschrieben. In einer bevorzugten Ausführungsform werden Anlagen zur Regenwasserbewirtschaftung, wie sie in DE 10 2008 007 227 beschrieben sind, oder Abwasserbehandlungsvorrichtungen, wie sie in DE 10 2010 040 645 beschrieben werden, verwendet.

Ein weiterer Aspekt der Erfindung ist die Verwendung der erfindungsgemäßen Zusammensetzung als Filtermedium.

Ein weiterer Aspekt der Erfindung ist die Verwendung der erfindungsgemäßen Zusammensetzung bzw. der erfindungsgemäßen Filtereinrichtung bzw. der erfindungsgemäßen Abwasserbehandlungsvorrichtung zur Behandlung von Abwasser, insbesondere Regenwasser. Die Zusammensetzung, Filtereinrichtung und/oder Abwasserbehandlungsvorrichtung wird insbesondere verwendet, um Metallionen, insbesondere Schwermetallionen, aus dem Abwasser, insbesondere Regenwasser, zu immobilisieren, insbesondere zu adsorbieren. Die Zusammensetzung, Filtereinrichtung und/oder Abwasserbehandlungsvorrichtung ist insbesondere geeignet, um Kupfer, Zink, Nickel, Cadmium und/oder Blei, insbesondere Kupfer und Zink, aus dem Abwasser an dem Filtermedium zu immobilisieren.

Es hat sich gezeigt, dass die oben beschriebenen Zusammensetzungen eine hohe Aufnahmekapazität haben, d.h. große Mengen an Metallionen immobilisieren, insbesondere adsorbieren, können. Überraschenderweise hat sich gezeigt, dass aus der erfindungsgemäßen Zusammensetzung die immobilisierten Schadstoffe, insbesondere Metallionen, auch unter Einfluss von Auftausalzen, wie sie beispielsweise im Winterdienst für die Enteisung von Straßen verwendet werden, nicht oder kaum freigesetzt werden. Da die erfindungsgemäße Zusammensetzung oder Filtereinrichtung bevorzugt in einem Zyklus von 3-5 Jahren gewechselt wird, ist sichergestellt, dass auch im Winter, wenn es zum Einsatz von Streusalzen kommt, das behandelte Abwasser im Wesentlichen nicht durch Metallionen kontaminiert ist.

Ein weiterer Aspekt der Erfindung ist auf ein Verfahren zur Behandlung von Abwasser gerichtet, wobei das Abwasser mit der erfindungsgemäßen Zusammensetzung oder der erfindungsgemäßen Filtereinrichtung in Kontakt gebracht wird. In einem anderen Aspekt der Erfindung umfasst das Verfahren zur Behandlung von Abwasser das Durchströmen des Abwassers durch die erfindungsgemäße Abwasserbehandlungsvorrichtung.

Die Erfindung wird im Folgenden beispielhaft erläutert.

### Figuren

- Figur 1a: Detaillierte Darstellung des Gehäuses der Filtereinrichtung
- Figur 1b: Detaillierte Darstellung eines Deckels des in Figur 1a dargestellten Gehäuses
- Figur 2: Detaillierte Schnittansicht des in Figur 1a dargestellten Gehäuses, welches ein Filtermedium umgibt
- Figur 3: Aufbau des Messzylinders für die Remobilisierungsversuche
- Figur 4: Versuchsaufbau für die Remobilisierungsversuche
- Figur 5: Messergebnisse für das erfindungsgemäße Filtermedium (Volumenverhältnis 4:1)

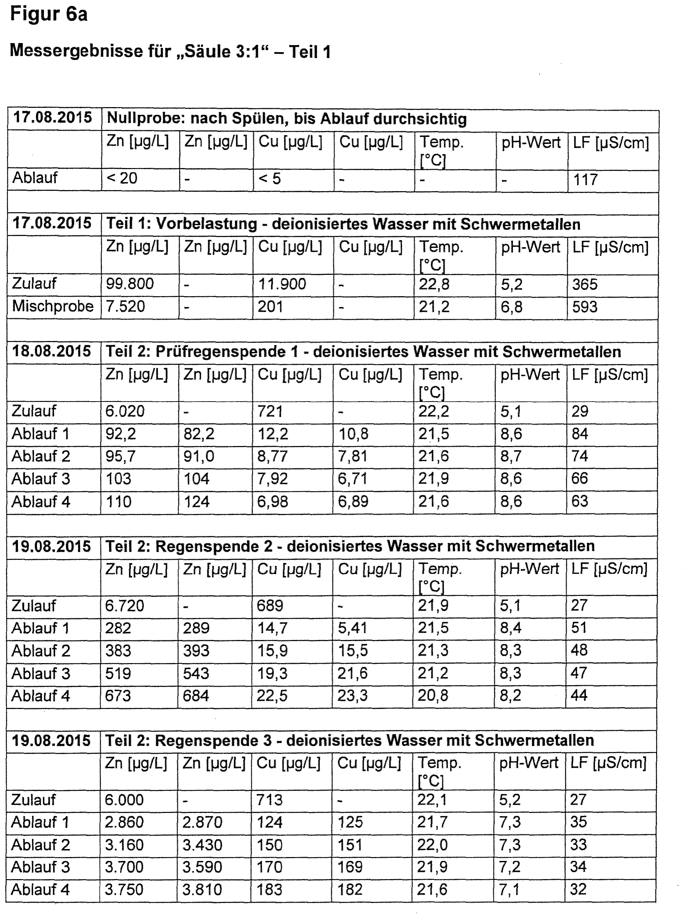

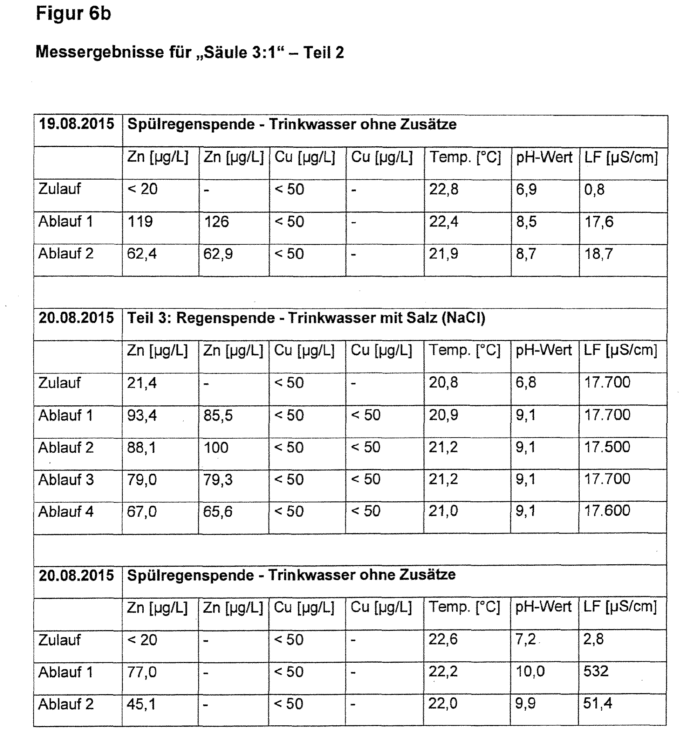

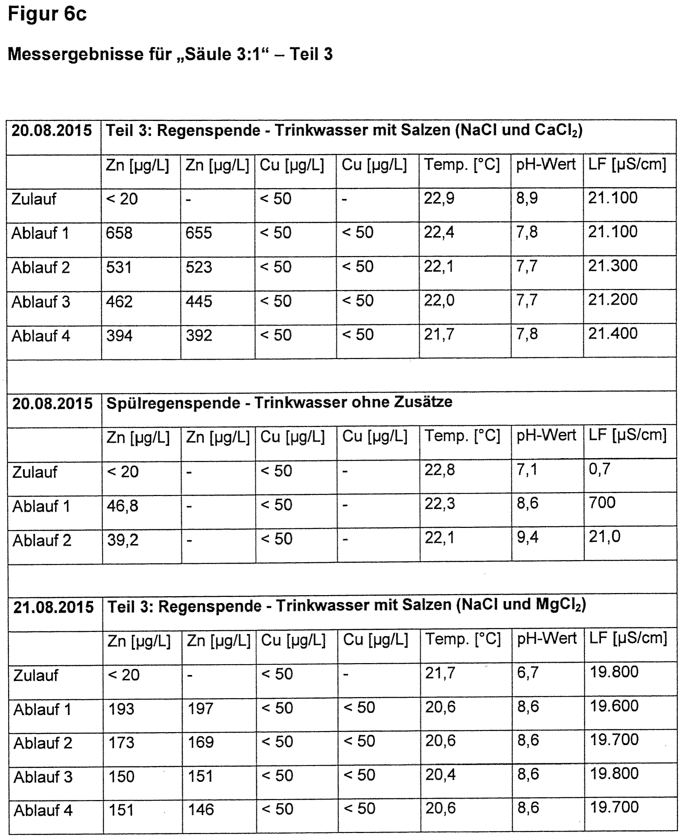

- Figur 6: Messergebnisse für das erfindungsgemäße Filtermedium (Volumenverhältnis 3:1)
- Figur 7: Messergebnisse für das Filtermedium des Standes der Technik (Säule links)
- Figur 8: Messergebnisse für das Filtermedium des Standes der Technik (Säule rechts)

### Beispiele

### Beispiel 1 - Aufbau einer erfindungsgemäßen Filtereinrichtung

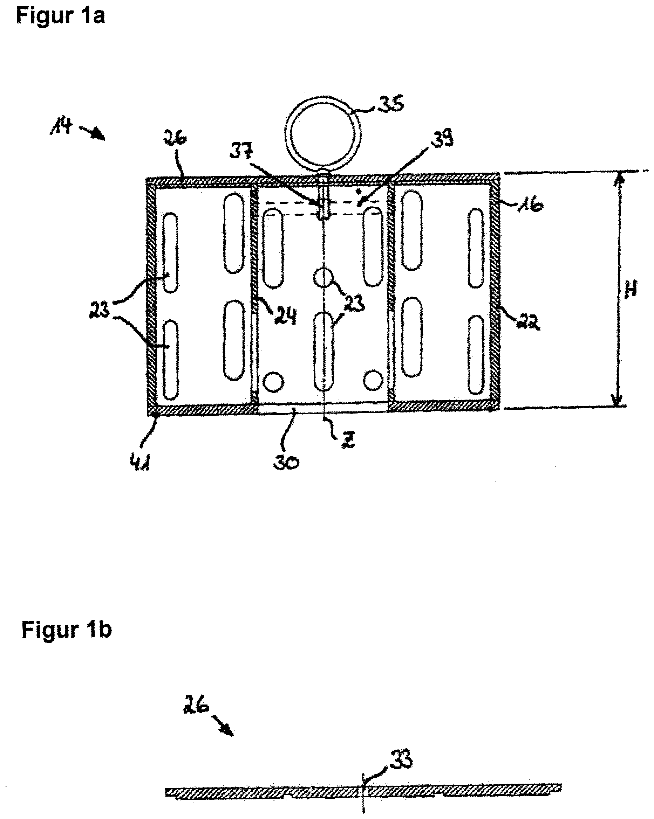

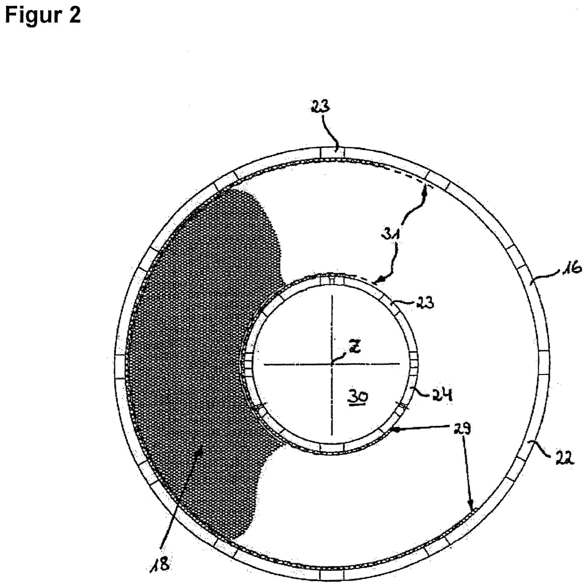

Eine bevorzugte Ausführungsform der Filtereinrichtung ist in den Figuren 1 und 2 dargestellt. Die Filtereinrichtung (14) umfasst ein Gehäuse (16), welches dazu ausgebildet ist, ein Filtermedium (18) (siehe Figur 2) aufzunehmen. Das Filtergehäuse (16) weist dabei im Wesentlichen die Form eines geraden Hohlkreiszylinders auf, wobei die Zylinderachse Z vertikal ausgerichtet ist. Das Filtergehäuse (16) umfasst eine von dem Abwasser in horizontaler Richtung im Wesentlichen allseitig durchströmbar ausgebildete radial äußere Umfangswand (22) sowie eine ebenfalls von dem Abwasser in horizontaler Richtung im Wesentlichen allseitig durchströmbar ausgebildete radial innere Umfangswandung (24) mit jeweils einer Mehrzahl an im Wesentlichen gleichförmig verteilten Durchbrechungen (23), durch welche das Abwasser durch die Wandungen hindurchströmen kann. Die radial äußere Umfangswand (22) bildet dabei zusammen mit der radial inneren Umfangswand (24) einen Aufnahmeraum für das Filtermedium (18). Es sei hier angemerkt, dass in Figur 1a nur das leere Filtergehäuse (16), d.h. das Filtergehäuse (16) ohne Filtermedium (18), dargestellt ist, wohingegen Figur 2 einen Schnitt senkrecht zur Zylinderachse Z des Filtergehäuses (16) mit dem Filtermedium (18) zeigt.

Wie in Figur 2 lediglich angedeutet ist, kann das Filtermedium (18) quasi als Packung im Inneren des hohlzylinderförmigen Filtergehäuses (16) von einer Maschenschicht (31), die auch als Gazeschicht bekannt ist, sicher umschlossen sein, wobei die Maschenweite der Maschenschicht (31) auf die Korngröße des verwendeten Filtermediums (18) abzustimmen ist. So kann beispielsweise die Maschenweite der Maschenschicht 0,5 mm betragen, wenn das Filtersubstrat eine Korngröße von 1-2 mm aufweist.

Ebenfalls in Figur 2 nur angedeutet ist eine Dränschicht (29), welche wie ein Abstandshalter jeweils zwischen der Maschenschicht (31) auf der einen Seite und der äußeren Umfangswand (24) bzw. der inneren Umfangswand (22) auf der anderen Seite angeordnet sein kann. Die Dränschicht (29) dient dazu, das in den Aufnahmeraum für das Filtermedium (18) einströmende Abwasser möglichst gleichmäßig über die gesamte Außenmantelfläche des Filtermediums (18) zu verteilen bzw. das aus dem Aufnahmeraum für das Filtermedium (18) über die gesamte Innenmantelfläche des Filtermediums (18) ausströmende Abwasser zu sammeln und den Durchbrechungen (23) zuzuführen. Somit kann die Leistungsfähigkeit des Filtermediums (18) bestmöglich genutzt werden. Bei der Dränschicht (29) handelt es sich beispielsweise um ein dreidimensionales mattenartiges Kunststofferzeugnis.

Nach unten hin ist das Gehäuse (16) durch eine untere Begrenzungswand begrenzt, welche lediglich den Aufnahmeraum für das Filtermedium (18) nach unten flüssigkeitsdicht abschließt, jedoch in der Mitte eine Öffnung (30) aufweist, durch welche das von dem Filtermedium (18) gereinigte Abwasser abströmen kann.

Nach oben hin ist das Gehäuse (16) durch eine obere Begrenzungswand (26) in Form eines vom restlichen Gehäuse (16) abnehmbaren Deckels vollflächig flüssigkeitsdicht abgeschlossen. Die obere Begrenzungswand (26) ist in Figur 1b nochmals separat dargestellt. Sie umfasst in dem vorliegenden Ausführungsbeispiel in der Mitte eine Durchgangsbohrung (33), durch welche ein Stift mit einem am oberen Längsende vorgesehenen Ring (35) durchgeführt werden kann, wodurch die Durchgangsbohrung (33) flüssigkeitsdicht geschlossen wird. Der den Ring (35) aufweisende Stift umfasst an seinem unteren Längsende ein Gewinde (37). Wie in Figur 1a gestrichelt angedeutet ist, kann mit dem restlichen Filtergehäuse (16) ein eine Gewindebohrung aufweisender Flachstahl (39) fest verbunden sein. In diesem Fall kann das Gewinde (37) an dem den Ring (35) aufweisenden Stift mit der Gewindebohrung im Flachstahl (39) in Eingriff gebracht werden. Zum Wechseln des Filtermediums (18) lässt sich somit die gesamte Filtereinrichtung (14) mittels eines an Reinigungsfahrzeugen üblicherweise vorgesehenen Hebezeugs, welches auf einfache Weise mit dem Ring (35) in Eingriff bringbar ist, anheben bzw. absenken.

### Beispiel 2 - Einfluss von Auftausalzen auf die Remobilisierung von auf Filtermedien zurückgehaltenen Metallionen (nicht erfindungsgemäß)

### Materialien und Analysemethoden

Für die gesamte Untersuchung wurde das Trinkwasser vom Forschungsgelände der TU München in Garching als Beschickungswasser mit einer elektrischen Leitfähigkeit (LF) von ca. 580 µS/cm verwendet, welches künstlich mit den Auftausalzen Natriumchlorid, Calciumchlorid und Magnesiumchlorid angereichert wurde. Die für die Auftausalze verwendeten Chemikalien waren Natriumchlorid (25-kg-PE-Sack, esco - european salt company GmbH & Co. KG), Calciumchlorid getrocknet, gepulvert reinst (5 kg, APPCA1426.5000, AppliChem GmbH) und Magnesiumchlorid-Hexahydrat reinst (5 kg, APPCA1447.5000, AppliChem GmbH). Der pH Wert der Lösung wurde im Vorlagebehälter nicht verändert, sodass er im Bereich zwischen 6,7 und 8,9 lag. Es wurde kein Puffer hinzugegeben, damit sich der pH Wert des Wassers in der Anlage entsprechend den darin vorherrschenden Bedingungen zügig verändern konnte.

Als Filtermedium wurde einerseits SediSorp® (HeGo Biotec) und andererseits eine Mischung aus SediSorp® und Herdofenkoks HOK®-Granulat (RWE Power AG) aus Braunkohlenkoks im Verhältnis 74,2:25,8 Gew.-% (Volumenverhältnis 3:1) bzw. 77,9:22,1 Gew.-% (Volumenverhältnis 4:1) verwendet. SediSorp® ist ein granuliertes Filtermaterial auf Basis von Eisen(III)-oxidhydrat (Kornbereich 1-2 mm). SediSorp® enthält etwa 1-10 Gew.-% MnO₂, 10-30 Gew.-% CaCO₃ und 60-90 Gew.-% Eisen(III)-oxidhydrat.

Zur Probennahme wurden 250 mL PE-LD-Flaschen (VWR Collection) verwendet. Bei jeder entnommenen Wasserprobe wurden neben den Zink- und Kupferkonzentrationen mittels Atomabsorptionsspektrometrie (AAS) nach DIN 38406-E8 bzw. DIN 38406-E7 auch der pH Wert nach EN ISO 10523:2012, die LF nach DIN EN 27888-C8 sowie die Temperatur nach DIN 38404-C4 gemessen. Alle Proben wurden mit Salpetersäure 65 % zur Analyse (EMSURE® ISO 2,5 L, 1.00456.2500, Merck KGaA) konserviert.

Bei zahlreichen Proben wurden zusätzlich die Konzentrationen an Natrium, Calcium und Magnesium mittels AAS nach DIN 38406-E14 (Natrium) bzw. DIN 38406-E3-1 (Calcium und Magnesium) bestimmt. Zusätzlich wurden weitere Proben für die Chloridbestimmung in 50 mL Greiner Röhrchen (VWR Collection) zu den gleichen Zeitpunkten wie bei den anderen Probennahmen entnommen. Diese Proben wurden nicht angesäuert und mittels Ionenchromatographie nach EN ISO 10304-1:2009-D19 analysiert. Bei den Ablaufmischproben wurden zur Bestimmung photometrische Küvetten-Schnelltests der Firma HACH LANGE GmbH verwendet (LCK 329, Bestimmungsgrenzen 0,1-8,0 mg/L für Cu; LCK 360, Bestimmungsgrenzen 0,2-6,0 mg/L für Zn).

### Versuchsaufbau

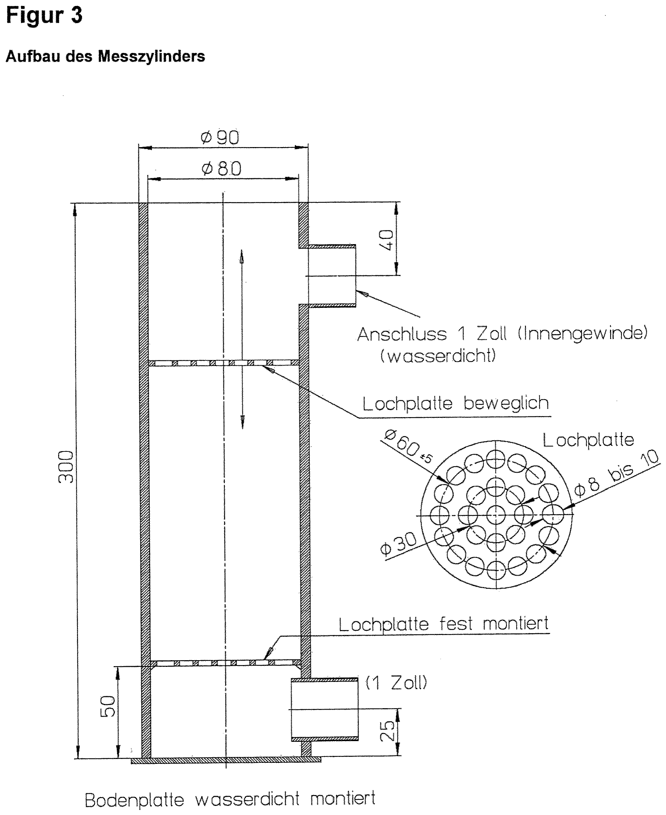

Als Versuchsapparatur wurden zwei baugleiche Messzylinder verwendet, deren Aufbau in Anlage 12 des Prüfberichts 7312218-01 der LGA vom 28.03.2012 dargestellt ist und somit auch bei der Prüfung durch die LGA verwendet wurde. Eine Zeichnung des verwendeten Zylinderaufbaus ist nachfolgend in Figur 3 dargestellt, wobei jeder Zylinder 144 mm hoch mit dem Substrat SediSorp® oder der erfindungsgemäßen Mischung befüllt wurde.

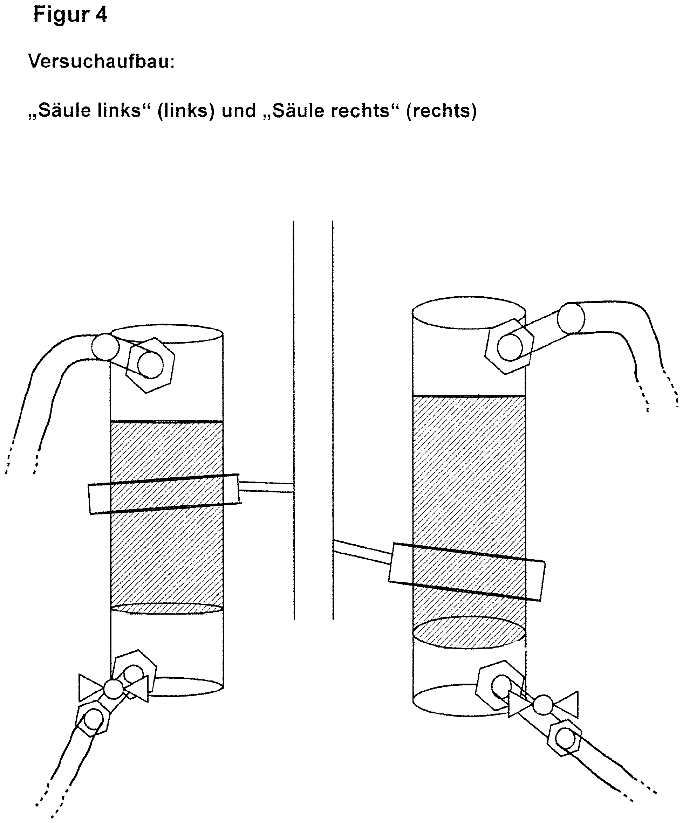

Dementsprechend lag der Modellfaktor dieser Untersuchungen wie bei der LGA bei 1:82 und die rechnerische Anschlussfläche betrug somit 9,15 m² für jede Säule. Die beiden baugleichen Säulen sind während der Versuchsdurchführung zusammen mit den verwendeten Probeflaschen in Figur 4 dargestellt.

### Versuchsdurchführung

Im Teil 1 der Versuchsdurchführung wurde eine Vorbelastung mit einer Fracht von drei Jahren auf das Filtermedium aufgebracht. Dafür wurden 3.729 mg Zink und 430 mg Kupfer in 35 L Wasser gelöst und es erfolgte eine Probennahme aus dem Vorlagebehälter, um die Soll-Konzentrationen zu überprüfen. Das Beschickungswasser wurde mit einer Regenspende von 10 L/(s·ha) auf das System aufgebracht. Der Ablauf wurde komplett in einem entsprechend großen Behälter aufgefangen. Nach einem Durchgang wurden die darin enthaltenen Ablaufmischkonzentrationen an Zink und Kupfer mit dem photometrischen Schnelltest bestimmt. Anschließend wurde das Beschickungswasser im Kreislauf durch die Anlage gepumpt bis mindestens 90 % von jeder der beiden Schwermetallfrachten in der Anlage zurückgehalten wurden. Abschließend wurden zwei Ablaufmischproben entnommen.

Beim Teil 2 wurden die Schwermetallfrachten des vierten Jahres aufgebracht. Die Durchführung erfolgte analog zum DIBt-Verfahren unter Verwendung des mit drei Jahren vorbelasteten Filterelements. Die berechnete Einjahresfracht wurde in drei gleiche Frachtportionen zu jeweils 413 mg Zink und 48 mg Kupfer in 65,9 L Wasser gelöst. Jeweils 65,9 L wurden zusammen mit den Schwermetallen in einer der drei Regenspenden auf die Anlage aufgebracht. Die Höhen der drei Regenspenden betrugen 2,5 L/(s·ha), 6,0 L/(s·ha) bzw. 25 L/(s·ha) bei den entsprechenden Dauern von 480 min, 200 min bzw. 48 min. Die im Zulaufwasser vorhandenen Schwermetallkonzentrationen sollten somit immer bei 6,35 mg/L Zink und 0,72 mg/L Kupfer liegen. Vor jedem Versuchsbeginn wurde eine Zulaufprobe entnommen, um wiederum die Soll-Konzentrationen zu überprüfen. Im Ablauf erfolgten pro Regenspende vier Probennahmen mit je zwei Probeflaschen nach jeweils einem Viertel der Versuchsdauer.

Nach dem Aufbringen der drei Teilregenspenden von Teil 2 wurde der Versuchsaufbau mit Trinkwasser gespült, um das mit Schwermetallen belastete Beschickungswasser vollständig aus dem Versuchsmodell zu entfernen. Die Menge an verwendetem Wasser entsprach der einer Teilregenspende von Teil 2 und somit 65,9 L. Es wurden ebenfalls eine Zulaufprobe zur Analyse der Trinkwasserzusammensetzung sowie nach jeweils der Hälfte der Spüldauer je zwei Proben im Ablauf zur Bestimmung der Schwermetallkonzentrationen entnommen.

17 Stunden nach der Spülung begann Teil 3 der Untersuchung, welcher sich mit dem Rückhalt der Schwermetalle unter Salzeinfluss befasst. Es wurde das gleiche, belastete Modell verwendet, welches auch bei den Versuchsteilen 1 und 2 verwendet wurde.

Beim ersten Salzversuch im erfindungsgemäßen Beispiel (Mischung aus SediSorp und HOK) wurde eine Auftausalzlösung mit Trinkwasser hergestellt, welche eine Konzentration von g NaCl/L aufwies. Das Wasservolumen entsprach der in Teil 2 pro Teilregenspende verwendeten Wassermenge. Als Regenspende wurden analog zum DIBt 6,0 L/(s·ha) bei einer Dauer von 200 min verwendet. Im Ablauf wurden vier Proben mit je zwei Probeflaschen nach jeweils einem Viertel der Versuchsdauer genommen. Anschließend wurden beide Säulen erneut mit Trinkwasser gespült, um das mit dem Salz belastete Beschickungswasser vollständig aus dem Versuchsmodell zu entfernen.

Beim zweiten Salzversuch im erfindungsgemäßen Beispiel bzw. beim ersten Salzversuch im Vergleichsbeispiel wurde eine Auftausalzlösung mit Trinkwasser mit Konzentrationen von 10 g NaCl/L und 2,5 g CaCl₂/L hergestellt. Das Wasservolumen entsprach der in Teil 2 pro Teilregenspende verwendeten Wassermenge. Als Regenspende wurden in Teil 3 6,0 L/(s·ha) bei einer Dauer von 200 min verwendet. Im Ablauf wurden vier Proben mit je zwei bzw. drei Probeflaschen nach jeweils einem Viertel der Versuchsdauer genommen.

Anschließend wurden sowohl im Vergleichsversuch als auch im erfindungsgemäßen Versuch beide Säulen erneut mit Trinkwasser gespült, um das mit den beiden Salzen belastete Beschickungswasser vollständig aus dem Versuchsmodell zu entfernen.

Der zweite (Vergleichsbeispiel) bzw. dritte (erfindungsgemäßes Beispiel) Salzversuch erfolgte analog den vorherigen Salzversuchen, wobei die Auftausalzlösung eine Konzentrationen von 10 g NaCl/L und 2,5 g MgCl₂/L hatte.

### Ergebnisse der erfindungsgemäßen Versuche

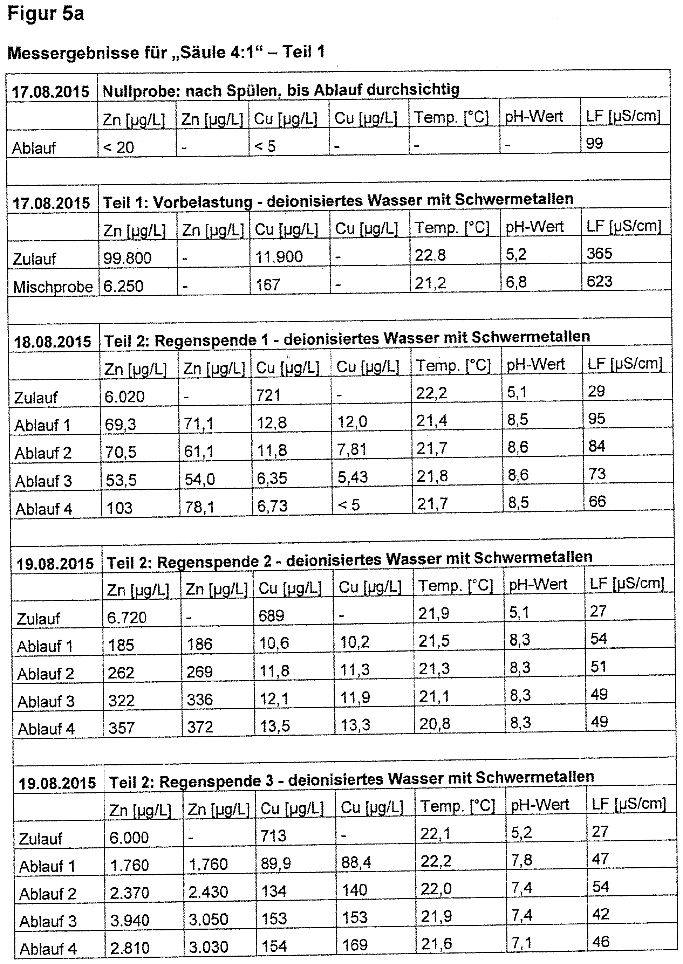

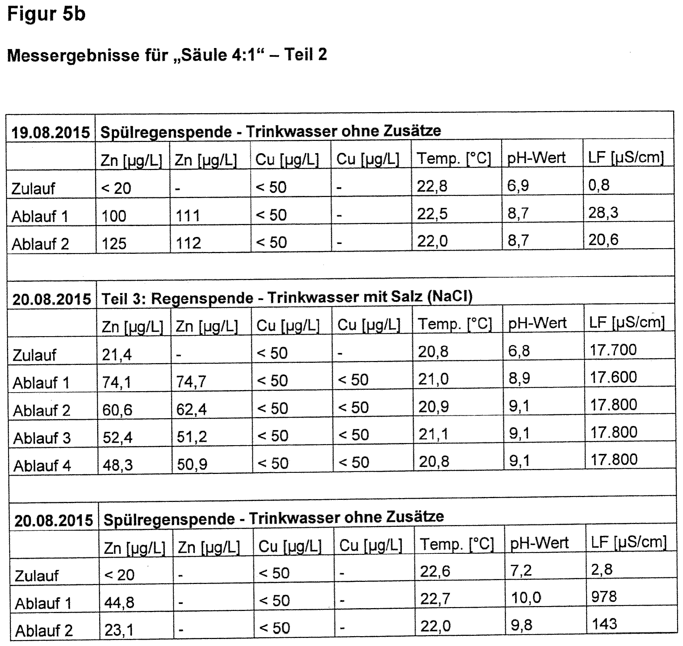

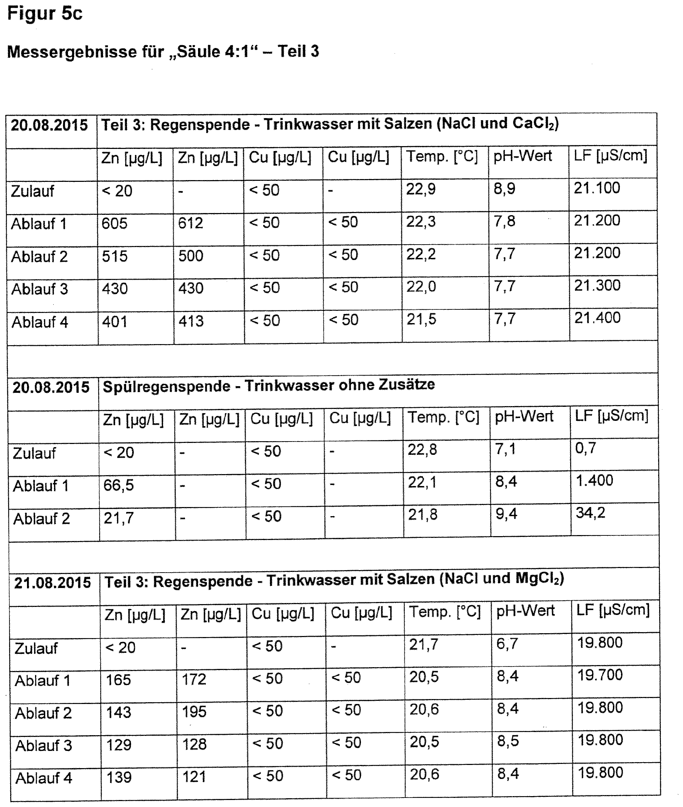

In den Tabellen 1 und 2 sind die bei jeder Untersuchung aus Teil 3 gemessenen Ablaufkonzentrationen getrennt nach Zink und Kupfer als Mittelwerte zusammen mit den Soll-Ablaufkonzentrationen, die sich aus den Anforderungen an die Anlage durch die BBodSchV ergeben, für jede Säule (= Mischung) einzeln und als Mittelwerte angegeben. Die für die Berechnung der Mittelwerte verwendeten Analyseergebnisse sind in den Figuren 5 (Volumenverhältnis 4:1) und 6 (Volumenverhältnis 3:1) vollständig für beide Säulen zusammen mit den Temperatur-, pH-, Wert- und LF-Messergebnissen aufgeführt.

**Tabelle 1: Ergebnisse der Wasserproben bezüglich Zink.**

| | **Zulauf** | **Probe** | **Ablauf** | **Ablauf soll** |
|---|---|---|---|---|
| | **[µg/L]** | | **[µg/L]** | **[µg/L]** |
| **Spülung 1** | < 20 | Säule 1:4 | 113 | |
| | < 20 | Säule 1:3 | 90,7 | |
| | | | | |
| **Salz 1 (NaCl)** | 21,4 | Säule 1:4 | 59,3 | |
| | 21,4 | Säule 1:3 | 82,2 | |
| | | **Mittelwert** | 70,8 | < 500 |
| | | | | |
| **Spülung 2** | < 20 | Säule 1:4 | 34,0 | |
| | < 20 | Säule 1:3 | 61,1 | |
| | | | | |
| **Salz 2 (NaCl/CaCl₂)** | < 20 | Säule 1:4 | 488 | |
| | < 20 | Säule 1:3 | 508 | |
| | | **Mittelwert** | 498 | <500 |
| | | | | |
| **Spülung 3** | < 20 | Säule 1:4 | 44,1 | |
| | < 20 | Säule 1:3 | 43,0 | |
| | | | | |
| **Salz 3 (NaCl/MgCl₂)** | < 20 | Säule 1:4 | 149 | |
| | < 20 | Säule 1:3 | 166 | |
| | | **Mittelwert** | 158 | < 500 |

Insgesamt gesehen erfüllen alle gemessenen Kupfer-Ablaufkonzentrationen die Anforderungen durch die BBodSchV, sodass von einem sehr geringen Einfluss der drei untersuchten Auftausalze auf die Kupferremobilisierung ausgegangen werden kann. Dahingegen sind gegenüber dem Zulauf erhöhte Zink-Ablaufkonzentrationen gemessen worden, sodass ein Einfluss des Salzes auf das erfindungsgemäße Filtermedium festgestellt werden konnte. Jedoch wurden im Ablauf die Anforderungen durch die BBodSchV für alle drei untersuchten Auftausalze im Mittel für Zink ebenfalls eingehalten.

**Tabelle 2: Ergebnisse der Wasserproben bezüglich Kupfer.**

| | **Zulauf** | **Probe** | **Ablauf** | **Ablauf soll** |
|---|---|---|---|---|
| | **[µg/L]** | | **[µg/L]** | **[µg/L]** |
| **Spülung 1** | < 50 | Säule 1:4 | < 50 | |
| | < 50 | Säule 1:3 | < 50 | |
| | | | | |
| **Salz 1 (NaCl)** | < 50 | Säule 1:4 | < 50 | |
| | < 50 | Säule 1:3 | < 50 | |
| | | **Mittelwert** | < 50 | < 50 |
| | | | | |
| **Spülung 2** | < 50 | Säule 1:4 | < 50 | |
| | < 50 | Säule 1:3 | < 50 | |
| | | | | |
| **Salz 2 (NaCl/CaCl₂)** | < 50 | Säule 1:4 | < 50 | |
| | < 50 | Säule 1:3 | < 50 | |
| | | **Mittelwert** | < 50 | < 50 |
| | | | | |
| **Spülung 3** | < 50 | Säule 1:4 | < 50 | |
| | < 50 | Säule 1:3 | < 50 | |
| | | | | |
| **Salz 3 (NaCl/MgCl₂)** | < 50 | Säule 1:4 | < 50 | |
| | < 50 | Säule 1:3 | < 50 | |
| | | **Mittelwert** | < 50 | < 50 |

Zusammenfassend ist festzuhalten, dass eine dauerhafte Beständigkeit des Schadstoffrückhalts am erfindungsgemäßen Filtermedium unter Auftausalzeinfluss (Natrium-, Calcium- und Magnesiumchlorid) bei den aufgeführten Versuchsbedingungen unter Berücksichtigung der BBodSchV nachgewiesen werden konnte.

### Ergebnisse der Vergleichsversuche

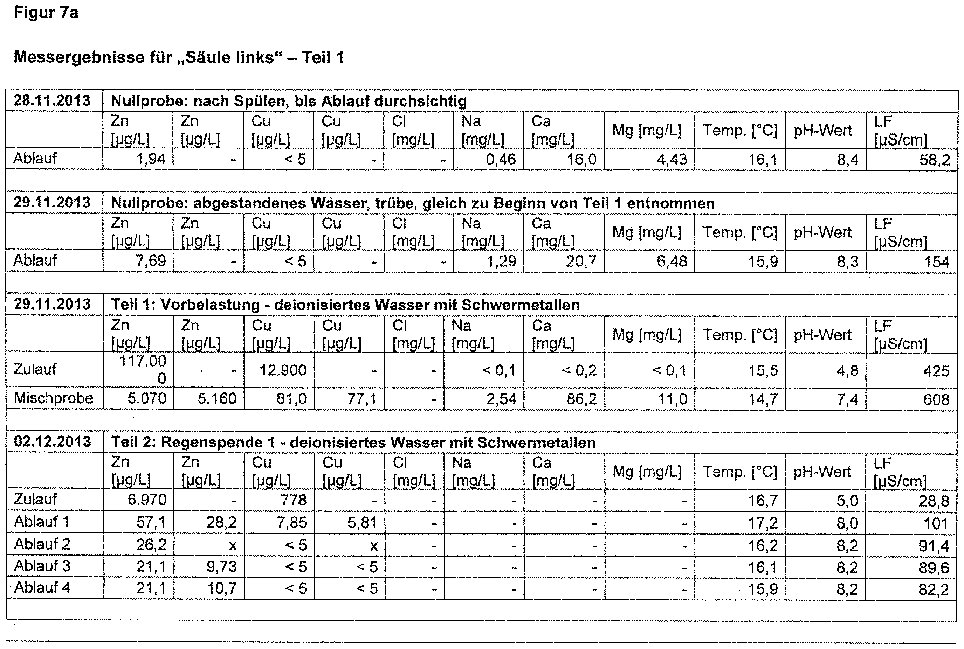

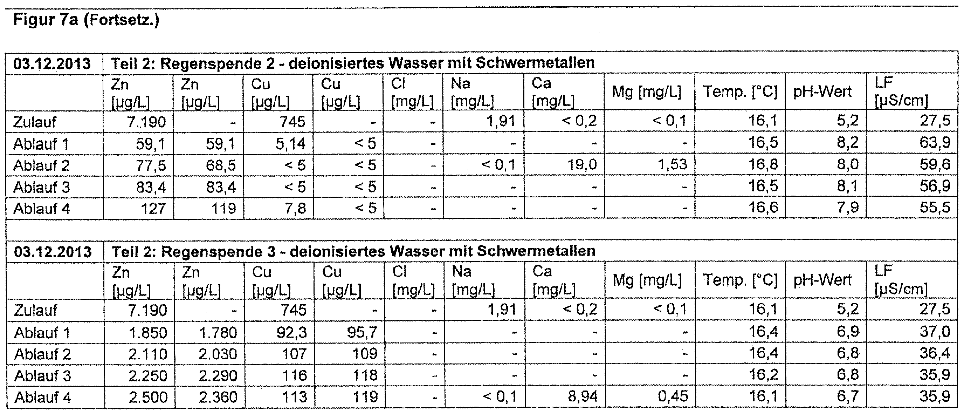

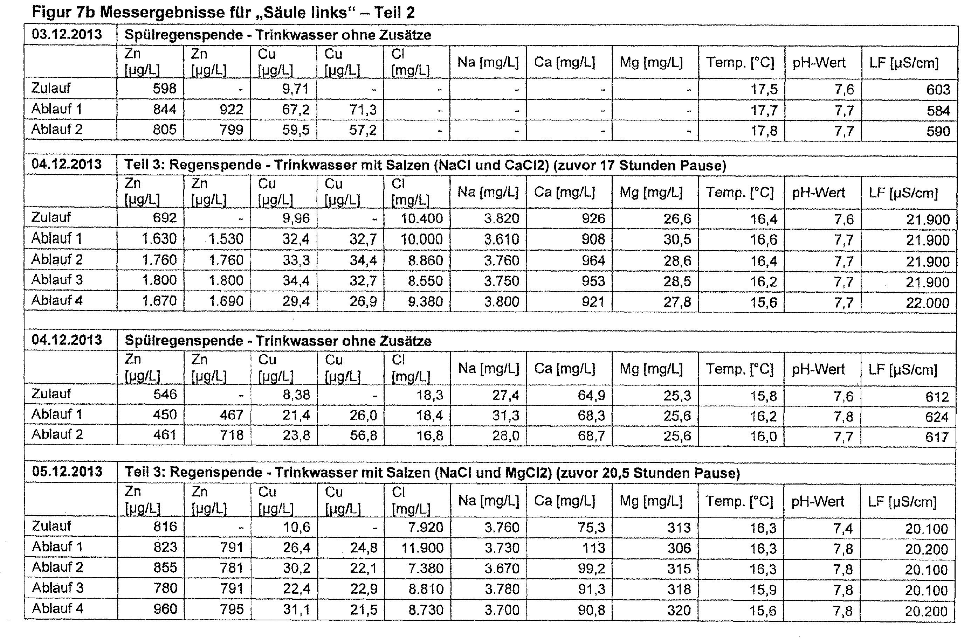

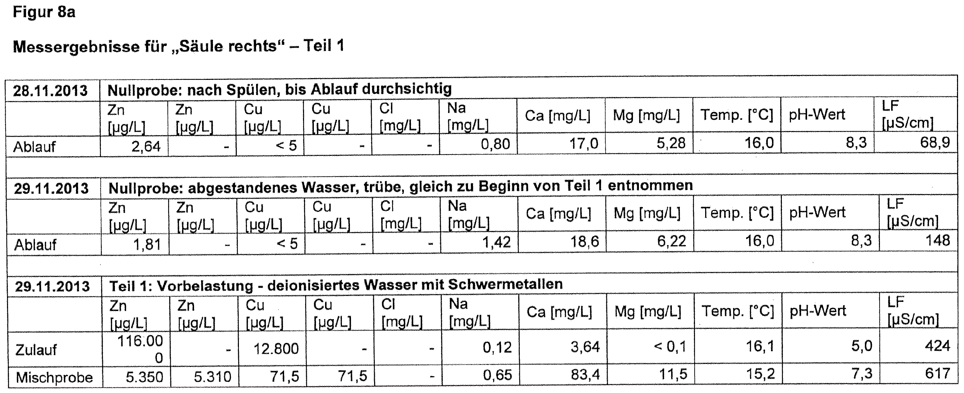

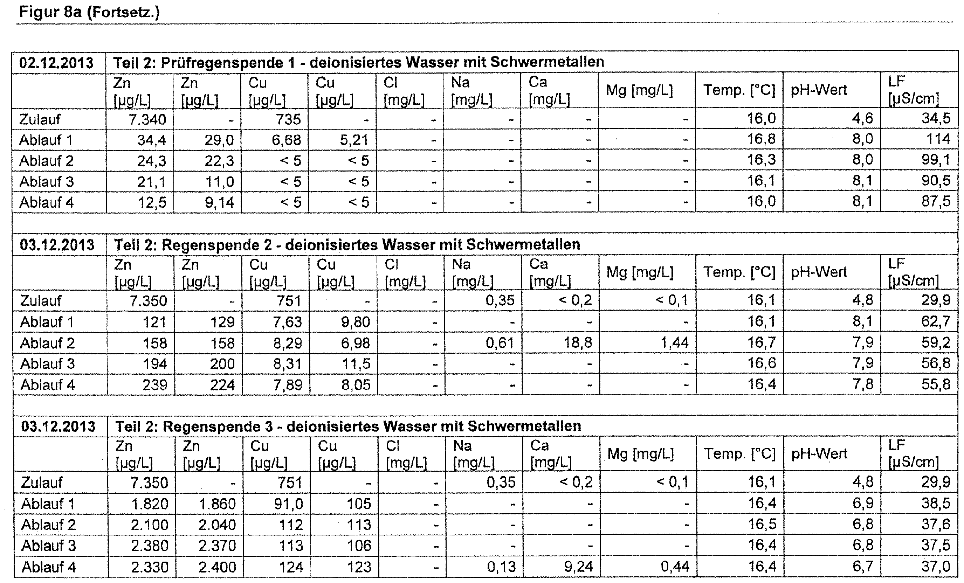

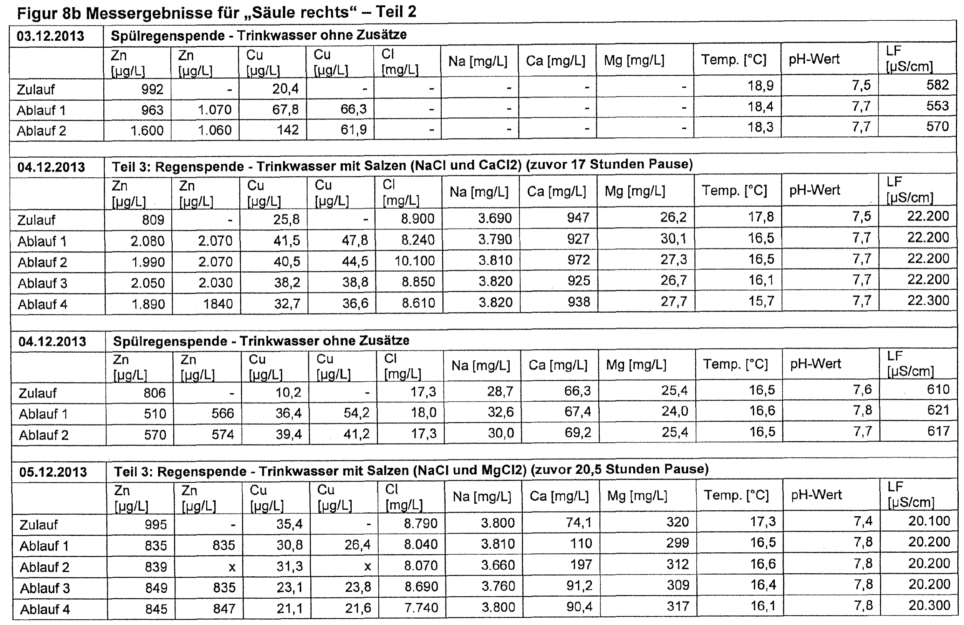

In den Tabellen 3 und 4 sind die bei jeder Untersuchung aus Teil 3 gemessenen Ablaufkonzentrationen getrennt nach Zink und Kupfer als Mittelwerte zusammen mit den Soll-Ablaufkonzentrationen, die sich aus den Anforderungen an die Anlage und den Zulaufkonzentrationen analog zum DIBt-Verfahren ergeben, für jede Säule einzeln angegeben. Die für die Berechnung der Mittelwerte verwendeten Analyseergebnisse sind in den Figuren 7 und 8 für beide Säulen vollständig zusammen mit den Temperatur-, pH Wert- und LF-Messergebnissen sowie den Ergebnissen für die Chlorid-, Natrium-, Calcium- und Magnesiumkonzentrationen aufgeführt.

Insgesamt gesehen liegen alle gemessenen Kupfer-Ablaufkonzentrationen nur geringfügig über den Zulaufkonzentrationen, sodass von einem sehr geringen Einfluss der beiden untersuchten Auftausalzgemische auf die Kupferremobilisierung ausgegangen werden kann. Dahingegen sind gegenüber dem Zulauf deutlich höherer Zink-Ablaufkonzentrationen gemessen worden, sodass insbesondere ein sehr großer Einfluss des zweiten Salzgemisches und ein geringerer Einfluss des dritten Salzgemisches auf die Zinkremobilisierung festzustellen ist.

**Tabelle 3: Ergebnisse der Wasserproben bezüglich Zink. Der Rückhalt bei allen vier Teiluntersuchungen wurde entsprechend der DIBt-Zulassungsgrundsätze berechnet (zulässiger Zn-Gesamtaustrag (500 + Messwert Tausalzlösung) µg/L).**

| | **Zulauf [µg/L]** | **Probe** | **Ablauf [µg/L]** | **Ablauf soll [µg/L]** |
|---|---|---|---|---|
| **Spülung 1** | 598 | Säule links | 843 | |
| | 992 | Säule rechts | 1.170 | |
| | | | | |
| **Salz 2 (NaCl/CaCl₂)** | 692 | Säule links | 1.710 | < 1.190 |
| | 809 | Säule rechts | 2.000 | < 1.300 |
| | | | | |
| **Spülung 2** | 546 | Säule links | 524 | |
| | 806 | Säule rechts | 555 | |
| | | | | |
| **Salz 3 (NaCl/MgCl₂)** | 816 | Säule links | 822 | < 1.310 |
| | 995 | Säule rechts | 841 | < 1.490 |

**Tabelle 4: Ergebnisse der Wasserproben bezüglich Kupfer. Der Rückhalt bei allen vier Teiluntersuchungen wurde entsprechend der DIBt-Zulassungsgrundsätze berechnet (zulässiger Cu-Gesamtaustrag (50 + Messwert Tausalzlösung) µg/L).**

| | **Zulauf [µg/L]** | **Probe** | **Ablauf [µg/L]** | **Ablauf soll [µg/L]** |
|---|---|---|---|---|
| **Spülung 1** | 9,71 | Säule links | 63,8 | |
| | 20,4 | Säule rechts | 84,5 | |
| | | | | |
| **Salz 2 (NaCl/CaCl₂)** | 9,96 | Säule links | 32,0 | < 59,9 |
| | 25,8 | Säule rechts | 40,1 | < 75,8 |
| | | | | |
| **Spülung 2** | 8,38 | Säule links | 32,0 | |
| | 10,2 | Säule rechts | 42,8 | |
| | | | | |
| **Salz 3 (NaCl/MgCl₂)** | 10,6 | Säule links | 25,2 | < 60,6 |
| | 35,4 | Säule rechts | 25,4 | < 85,4 |

Zusammenfassend kann festgestellt werden, dass bei Verwendung der erfindungsgemäßen Zusammensetzung die Remobilisierung von Schwermetallionen, insbesondere von Zink, unter Salzeinfluss deutlich reduziert werden kann.

## Patentansprüche

1. Zusammensetzung, insbesondere zur Immobilisierung von Metallionen, umfassend
(i) mindestens ein Eisenhydroxid, bevorzugt in einem Anteil von etwa 30-80 Gew.-% bezogen auf die Gesamtzusammensetzung und
(ii) mindestens ein poröses Trägermaterial, bevorzugt in einem Anteil von etwa 20-50 Gew.-% bezogen auf die Gesamtzusammensetzung,
wobei das poröse Trägermaterial (ii) mit Schwefel und/oder Schwefelverbindungen modifizierten Koks umfasst.

2. Zusammensetzung nach Anspruch 1, ferner umfassend
(iii) Calciumcarbonat, bevorzugt in einem Anteil von etwa 0-30 Gew.-% bezogen auf die Gesamtzusammensetzung und ggf.
(iv) mindestens ein Manganoxid, bevorzugt Mn(III)-oxid oder Mn(IV)-oxid, bevorzugt in einem Anteil von etwa 0-10 Gew.-% bezogen auf die Gesamtzusammensetzung.

3. Zusammensetzung nach einem der vorhergehenden Ansprüche, wobei Komponente (i) mindestens ein Eisen(III)-hydroxid oder Eisen(III)-oxidhydroxid, bevorzugt ausgewählt aus Wiesenerz (Fe₂O₃·3H₂O), Limonit (2Fe₂O₃·3H₂O), Gelbeisenerz (Fe₂O₃·2H₂O) und Geothit (Fe₂O₃·H₂O), umfasst.

4. Zusammensetzung nach einem der vorhergehenden Ansprüche, wobei das poröse Trägermaterial (ii) in Form eines Granulats vorliegt, bevorzugt mit einer mittleren Korngröße von 0,5-10 mm, stärker bevorzugt 1,0-6 mm.

5. Zusammensetzung nach einem der vorhergehenden Ansprüche, wobei das poröse Trägermaterial (ii) modifizierten Braunkohlenkoks, umfasst.

6. Zusammensetzung nach einem der vorhergehenden Ansprüche, wobei das poröse Trägermaterial (ii) mit mindestens einem Polysulfid modifiziert ist.

7. Zusammensetzung nach einem der vorhergehenden Ansprüche, wobei die Komponenten (i), ggf. (iii) und ggf. (iv) in Form eines Granulats vorliegen, bevorzugt mit einer mittleren Korngröße von 0,2-5 mm, stärker bevorzugt 1,0-3,0 mm.

8. Zusammensetzung nach einem der vorhergehenden Ansprüche, wobei das poröse Trägermaterial (ii) und das Granulat gemäß Anspruch 7 in der Zusammensetzung als homogene Mischung, als Mischung mit einem Gradienten oder in separaten Schichten vorliegen.

9. Filtereinrichtung, insbesondere zur Abwasserbehandlung, umfassend eine Zusammensetzung nach einem der Ansprüche 1-8 als Filtermedium.

10. Filtereinrichtung nach Anspruch 9, ferner umfassend ein Gehäuse mit einer Mehrzahl an Durchbrechungen, ggf. eine Maschenschicht und ggf. eine Dränschicht.

11. Abwasserbehandlungsvorrichtung, umfassend einen Abwasserzulauf, einen Abwasserablauf und eine Zusammensetzung nach einem der Ansprüche 1-8 oder eine Filtereinrichtung nach einem der Ansprüche 9-10.

12. Verwendung der Zusammensetzung nach einem der Ansprüche 1-8 oder der Filtereinrichtung nach einem der Ansprüche 9-10 oder der Abwasserbehandlungsvorrichtung nach Anspruch 11 zur Behandlung von Abwasser, insbesondere Regenwasser.

13. Verwendung nach Anspruch 12 zur Entfernung von Metallionen aus Abwasser.

14. Verfahren zur Behandlung von Abwasser, umfassend Inkontaktbringen des Abwassers mit der Zusammensetzung nach einem der Ansprüche 1-8 oder der Filtereinrichtung nach einem der Ansprüche 9-10 oder Durchströmen der Abwasserbehandlungsvorrichtung nach Anspruch 11 mit Abwasser.

## Claims

1. Composition, in particular for the immobilization of metal ions, comprising
(i) at least one iron hydroxide, preferably in a proportion of approximately 30-80 wt.% based on the total composition, and
(ii) at least one porous carrier material, preferably in a proportion of approximately 20-50 wt.% based on the total composition,
wherein the porous carrier material (ii) comprises coke modified with sulfur and/or sulfur compounds.

2. Composition according to claim 1, further comprising
(iii) calcium carbonate, preferably in a proportion of approximately 0-30 wt.% based on the total composition, and optionally
(iv) at least one manganese oxide, preferably Mn(III) oxide or Mn(IV) oxide, preferably in a proportion of approximately 0-10 wt.% based on the total composition.

3. Composition according to either of the preceding claims, wherein component (i) comprises at least one iron(III) hydroxide or iron(III) oxide hydroxide, preferably selected from bog iron ore (Fe₂O₃ • 3H₂O), limonite (2Fe₂O₃ • 3H₂O), jarosite (Fe₂O₃ • 2H₂O) and goethite (Fe₂O₃ • H₂O).

4. Composition according to any of the preceding claims, wherein the porous carrier material (ii) is in the form of a granular material, preferably having an average grain size of 0.5-10 mm, more preferably 1.0-6 mm.

5. Composition according to any of the preceding claims, wherein the porous carrier material (ii) comprises modified lignite coke.

6. Composition according to any of the preceding claims, wherein the porous carrier material (ii) is modified with at least one polysulfide.

7. Composition according to any of the preceding claims, wherein the components (i), optionally (iii) and optionally (iv) are in the form of a granular material, preferably having an average grain size of 0.2-5 mm, more preferably 1.0-3.0 mm.

8. Composition according to any of the preceding claims, wherein the porous carrier material (ii) and the granular material according to claim 7 are present in the composition as a homogeneous mixture, as a mixture having a gradient or in separate layers.

9. Filter device, in particular for wastewater treatment, comprising a composition according to any of claims 1-8 as a filter medium.

10. Filter device according to claim 9, further comprising a housing having a plurality of openings, optionally a mesh layer and optionally a drainage layer.

11. Wastewater treatment apparatus comprising a wastewater inlet, a wastewater outlet and a composition according to any of claims 1-8 or a filter device according to either of claims 9-10.

12. Use of the composition according to any of claims 1-8 or the filter device according to either of claims 9-10 or the wastewater treatment apparatus according to claim 11 for the treatment of wastewater, in particular rainwater.

13. Use according to claim 12 for the removal of metal ions from wastewater.

14. Method for the treatment of wastewater, comprising bringing the wastewater into contact with the composition according to any of claims 1-8 or the filter device according to either of claims 9-10 or flowing wastewater through the wastewater treatment apparatus according to claim 11.

## Revendications

1. Composition, en particulier pour l'immobilisation d'ions métalliques, comprenant
(i) au moins un hydroxyde de fer, de préférence dans une proportion d'environ 30 à 80 % en poids par rapport à la composition entière et
(ii) au moins un matériau porteur poreux, de préférence dans une proportion d'environ 20 à 50 % en poids par rapport à la composition entière,
dans laquelle le matériau porteur poreux (ii) comporte du coke modifié avec du soufre et/ou des composés de soufre.

2. Composition selon la revendication 1, comprenant de plus
(iii) du carbonate de calcium, de préférence dans une proportion d'environ 0 à 30 % en poids par rapport à la composition entière et éventuellement
(iv) au moins un oxyde de manganèse, de préférence oxyde de Mn(III) ou oxyde de Mn(IV), de préférence dans une proportion d'environ 0 à % en poids par rapport à la composition entière.

3. Composition selon l'une quelconque des revendications précédentes, dans laquelle le composant (i) comporte au moins un hydroxyde de fer(III) ou hydroxyde d'oxyde de fer(III), de préférence sélectionné parmi le fer des prairies (Fe₂O₃·3H₂O), la limonite (2Fe₂O₃·3H₂O), le minerai de fer jaune (Fe₂O₃·2H₂O) et la goethite (Fe₂O₃·H₂O).

4. Composition selon l'une quelconque des revendications précédentes, dans laquelle le matériau porteur poreux (ii) se présente sous la forme d'un granulat, de préférence avec une granulométrie médiane de 0,5 à mm, de manière plus fortement préférée de 1,0 à 6 mm.

5. Composition selon l'une quelconque des revendications précédentes, dans laquelle le matériau porteur poreux (ii) comporte du coke de lignite modifié.

6. Composition selon l'une quelconque des revendications précédentes, dans laquelle le matériau porteur poreux (ii) est modifié avec au moins un polysulfure.

7. Composition selon l'une quelconque des revendications précédentes, dans laquelle les composants (i), éventuellement (iii) et éventuellement (iv) se présentent sous la forme d'un granulat, de préférence avec une granulométrie médiane de 0,2 à 5 mm, de manière plus fortement préférée de 1,0 à 3,0 mm.

8. Composition selon l'une quelconque des revendications précédentes, dans laquelle le matériau porteur poreux (ii) et le granulat selon la revendication 7 se présentent dans la composition en tant que mélange homogène, en tant que mélange avec un gradient ou dans des couches séparées.

9. Dispositif de filtration, en particulier pour le traitement d'eaux usées, comprenant une composition selon l'une quelconque des revendications 1 à 8 en tant que support filtrant.

10. Dispositif de filtration selon la revendication 9, comprenant de plus un boîtier avec une pluralité de percements, éventuellement une couche à mailles ou éventuellement une couche de drainage.

11. Dispositif de traitement d'eaux usées comprenant une alimentation d'eaux usées, une évacuation d'eaux usées et une composition selon l'une quelconque des revendications 1 à 8 ou un dispositif de filtration selon l'une quelconque des revendications 9 et 10.

12. Utilisation de la composition selon l'une quelconque des revendications 1 à 8 ou du dispositif de filtration selon l'une quelconque des revendications 9 et ou du dispositif de traitement d'eaux usées selon la revendication 11 pour le traitement d'eaux usées, en particulier d'eau de pluie.

13. Utilisation selon la revendication 12 pour l'élimination d'ions métalliques d'eaux usées.

14. Procédé de traitement d'eaux usées, comprenant la mise en contact des eaux usées avec la composition selon l'une quelconque des revendications 1 à 8 ou du dispositif de filtration selon l'une quelconque des revendications 9 et ou le passage d'eaux usées à travers le dispositif de traitement d'eaux usées selon la revendication 11.
